# EUROPEAN PATENT APPLICATION

(11) **EP 1 970 810 A2**
(43) Date of publication of application: **17.09.2008**
(21) Application number: 07025229.1
(22) Date of filing: 28.12.2007
(51) Int. Cl.: G06F 11/36

(54) **Program creation support**

(30) Priority: 05.01.2007 JP 2007000760
(71) Applicant: Hitachi, Ltd., Chiyoda-ku Tokyo 100-8280 (JP)
(72) Inventor: Ogasawara, Kenji, Chiyoda-ku Tokyo 100-8220 (JP); Koga, Akihiko, Chiyoda-ku Tokyo 100-8220 (JP); Noguchi, Hideto, Chiyoda-ku Tokyo 100-8220 (JP)
(74) Representative: Strehl Schübel-Hopf & Partner

(57) **Abstract**

An apparatus for supporting creation of a program includes: a program execution module (25) which reads a program (60) including a random output block (64) from a storage device (30), executes a program with a test input value, and obtains an execution result of the program; a model execution module (22) which reads a model (40) including a random output model block (44) from the storage device (30), executes the model on the test input value using a model execution tool, and obtains an execution result of the model; and a cross-checking module (28) which compares the execution result obtained by the program execution module (25) and the execution result obtained by the model execution module (22). The model execution module (22) obtains an output value of the random output block which is outputted as a result of execution of the program, and uses the output value of the random output block (64) as an output value of the random output model block (44) in the model.

## Description

### CLAIM OF PRIORITY

The present application claims priority from Japanese application no. 2007-000760 filed on January 5, 2007, the content of which is hereby incorporated by reference into this application.

### Background of the Invention

The present invention relates to a program creation support apparatus, a creation support program and a creation support method therfor, containing a random output block which outputs a random value with respect to an input value.

An example of apparatuses for supporting creation of a program that have been disclosed is one that automatically generates source code of a program from a model obtained by modeling design specifications of the program.

In recent years, such apparatuses for supporting creation of a program are used for increased efficiency in program development.

It is common to conduct a test, once a program is completed, to see whether the program has been programmed appropriately. In the test, an input value and an output value associated with the input value are prepared in advance, the input value is entered to a computer which runs the developed program, and an output value obtained as a result of running the program is compared against the prepared output value.

A program usually outputs a unique value with respect to a specific input value. However, some programs may be required to output a random value for an input value. For example, in a system where multiple machines that perform the same processing are arranged in parallel to one another, if a program that manages the activation of these machines boots up the machines in a fixed order, one of the machines is always put into use, resulting in that machine having a shorter working life than the rest of the machines, and it is therefore required to randomly select which machine is to be booted up.

This type of program, where outputs are random, cannot be tested in the manner as described above with a prepared input value and output value.

### Summary of the Invention

The present invention has been made in view of the above, and it is therefore an object of the present invention to provide a program creation support apparatus, a creation support program and a creation support method therfor, that make it possible to test a program containing a random output block which outputs a random value with respect to an input value.

In order to achieve the above object, the present invention provides an apparatus for supporting creation of a program containing a random output block which outputs a random value with respect to an input value, the apparatus including: a program storage area which stores the program; a model storage area which stores a program model, the programmodel being based on a specification of the program and containing a random output model block, which corresponds to the random output block in the program; an input value obtaining unit which obtains a test input value of the program; a program execution unit which reads the program from the program storage area, executes the program on the test input value obtained by the input value obtaining unit, and obtains an execution result of the program; a model execution unit which reads the program model from the model storage area, executes the program model on the test input value obtained by the input value obtaining unit using a model execution tool, and obtains an execution result of the program model; and a cross-checking unit which performs one of outputting the execution result obtained by the program execution unit and the execution result obtained by the model execution unit, and comparing the execution result obtained by the program execution unit and the execution result obtained by the model execution unit against each other to output a result of the comparison; in which the model execution unit obtains an output value of the random output block which is outputted as a result of execution of the program by the program execution unit, and uses the output value of the random output block as an output value of the random output model block in the program model.

Here, the apparatus for supporting creation of a program may further include: a skeleton creation unit which reads the program model from the model storage area and uses the program model to create a skeleton of the program; and a program generation unit which receives program component data lacking from the skeleton, incorporates the program component data into the skeleton to generate the program, and stores the program in the program storage area; in which the skeleton creation unit may include a random output skeleton creation unit, which creates a random output skeleton containing a step of storing an output value of the random output block in a specific storage area in creating a skeleton of the random output block from the random output model block, and in which the model execution unit may obtain the output value of the random output block which has been stored in the specific storage area as a result of execution of the program by the program execution unit.

Further, in order to achieve the above object, the present invention provides a creation support program for supporting creation of a program containing a random output block which outputs a random value with respect to an input value, the creation support program including: an input value obtaining step of obtaining a test input value of the program; a program execution step of reading the program, which is stored in a storage area of a computer, from the storage area, executing the program on the test input value obtained in the input value obtaining step, and obtaining an execution result of the program; a model execution step of reading a program model from the storage area in the computer, executing the program model on the test input value obtained in the input value obtaining step using a model execution tool, and obtaining an execution result of the program model, the programmodel being based on a specification of the program and containing a random output model block, which corresponds to the random output block in the program; and a cross-checking step of outputting the execution result that is obtained through execution of the program execution step and the execution result that is obtained through execution of the model execution step; in which the model execution step includes obtaining an output value of the random output block which is outputted as a result of execution of the program in the program execution step, and using the output value of the random output block as an output value of the random output model block in the program model.

Further, in order to achieve the above object, the present invention provides a method for supporting creation of a program containing a random output block which outputs a random value with respect to an input value, the method including: a step of storing the program in a storage area; a step of storing a program model in the storage area, the program model being based on a specification of the program and containing a random output model block, which corresponds to the random output block in the program; a test value inputting step of inputting a test input value of the program; a program execution step of reading the program from the storage area, executing the program on the test input value inputted in the test value inputting step, and obtaining an execution result of the program; a model execution step of reading the program model from the storage area, executing the program model on the test input value inputted in the test value inputting step using a model execution tool, and obtaining an execution result of the program model; and a cross-checking step of performing one of outputting the execution result obtained in the program execution step and the execution result obtained in the model execution step, and comparing the execution result obtained in the program execution step and the execution result obtained in the model execution step against each other to output a result of the comparison; in which the model execution step includes obtaining an output value of the random output block which is outputted as a result of execution of the program in the program execution step, and using the output value of the random output block as an output value of the random output model block in the program model.

According to the present invention, a developed program can be tested even if the program contains a random output block which outputs a random value with respect to an input value.

### Brief Description of the Drawings

In the accompanying drawings:
FIG. 1 is an explanatory diagram showing a configuration of a program creation support apparatus according to an embodiment of the present invention;
FIG. 2 is a flow chart showing operation of the program creation support apparatus according to the embodiment of the present invention;
FIG. 3 is a problem analysis diagram (PAD) showing detailed processing of Step 20 of FIG. 2;

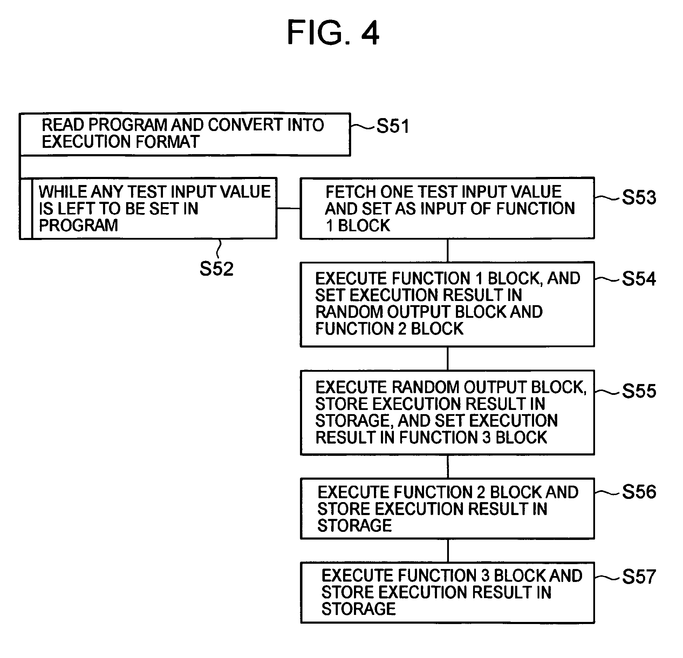

FIG. 4 is a PAD showing detailed processing of Step 50 of FIG. 2;
FIG. 5 is a PAD showing detailed processing of Step 60 of FIG. 2;
FIG. 6 is an explanatory diagram showing the data configuration of a random output skeleton block according to the embodiment of the present invention;
FIG. 7 is an explanatory diagram showing an example of processing content in the random output block according to the embodiment of the present invention;
FIG. 8 is an explanatory diagram showing an example of random output values which are stored in a storage device according to the embodiment of the present invention;
FIG. 9 is an explanatory diagram showing an example of a random output aggregation result according to the embodiment of the present invention;
FIG. 10 is an explanatory diagram showing an example of block output values which are stored in the storage device according to the embodiment of the present invention;
FIG. 11 is an explanatory diagram showing an example of model block output values which are stored in the storage device according to the embodiment of the present invention; and
FIG. 12 is an explanatory diagram showing an example of a result of checking a program model execution result and a program execution result against each other according to the embodiment of the present invention.

### Description of the Preferred Embodiment

A program creation support apparatus according to an embodiment of the present invention will be described below with reference to the accompanying drawings.

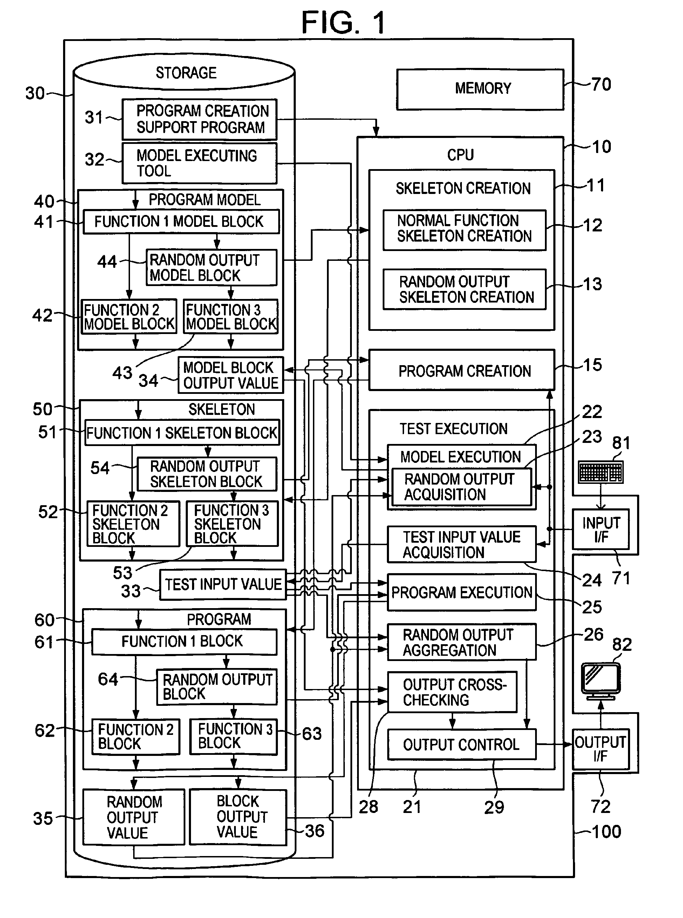

A program creation support apparatus 100 of this embodiment is, as shown in FIG. 1, a computer in terms of hardware, and has a CPU 10, which executes various types of processing, a storage device 30, which stores various types of data, programs, and the like, a memory 70, which serves as a work area of the CPU 10, an input interface 71, an output interface 72, an input device 81, which is a keyboard or the like, and an output device 82, which is a display or the like.

The storage device 30 stores in advance a program creation support program 31 for a program to be developed, and a model execution tool 32, which is used in executing a model of the program to be developed. The storage device 30 also stores, sequentially, as will be described later, a model 40 of the program to be developed, which is denoted by reference numeral 60, a skeleton 50 created based on the program model 40, and the program 60 created based on the skeleton 50.

The following is a description of the program model 40, the skeleton 50, and the program 60.

The programmodel 40 is created based on design a specification of the program 60 to be developed, and is written in a model format that allows the program model 40 to be executed in a computer, using the model execution tool 32 mentioned above. The program model 40 has a plurality of function model blocks 41, 42, 43, and 44. One of these function model blocks, 44, is a random output model block which outputs a random value with respect to an input value. An input value entered to the program model 40 is, in this example, input to a function 1 model block 41, an output of which is inputted to the random output model block 44 and a function 2 model block 42. An output of the random output model block 44 is inputted to a function 3 model block 43.

The skeleton 50 is created based on the program model 40 as mentioned above, and has a function 1 skeleton block 51, a function 2 skeleton block 52, a random output skeleton block 54, and a function 3 skeleton block 53, which correspond to the function 1 model block 41, the function 2 model block 42, the random output model block 44, and the function 3 model block 43 of the program model 40, respectively.

The program 60 is created by incorporating appropriate program component data into the skeleton 50, and is written in a code format. The program 60 has a function 1 block 61, a function 2 block 62, a random output block 64, and a function 3 block 63, which correspond to the function 1 skeleton block 51, the function 2 skeleton block 52, the random output skeleton block 54, and the function 3 skeleton block 53, respectively.

The storage device 30 also stores, sequentially, test input values 33 of the program 60, model block output values 34, which are output values of the function model blocks 41, 42, and 43 constituting the program model 40, block output values 36, which are output values of the models 61, 62, and 63 constituting the program 60, and a random output value 35, which is an output value of the random output block 64 of the program 60, while executing the program model 40 and the program 60 in order to test the program 60.

The CPU 10 has, in terms of function, a skeleton creation module 11, which creates the skeleton 50 based on the program model 40, a program generation module 15, which produces the program 60 based on the skeleton 50, and a test execution module 21, which tests the program 60.

The skeleton creation module 11 has a normal function skeleton creation module 12, which creates the function skeleton blocks 51, 52, and 53 based on other blocks in the program model 40, excepting the random output model block 44, namely, the function model blocks 41, 42, and 43, and a random output skeleton creation module 13, which creates the random output skeleton block 54 based on the random output model block 44 of the program model 40.

The test execution module 21 has a model execution module 22, which executes the program model 40using the model execution tool 32 stored in the storage device 30, a test input value obtaining module 24, which obtains a test input value for testing, a program execution module 25, which executes the program 60, a random output aggregation module 26, which performs statistical processing on outputs that the random output block 64 produces as a result of executing the program 60, an output cross-checking module 28, which checks an execution result of the program model 40 and an execution result of the program 60 against each other, and an output control module 29, which outputs an aggregation result of the random data aggregation module 26, a cross-check result of the output cross-checking module 28, and the like, to the output device 82.

The above function modules of the CPU 10 are all made functional by the CPU 10 executing the program creation support program 31 stored in the storage device 30.

Described next is the operation of the program creation support apparatus 100 according to this embodiment.

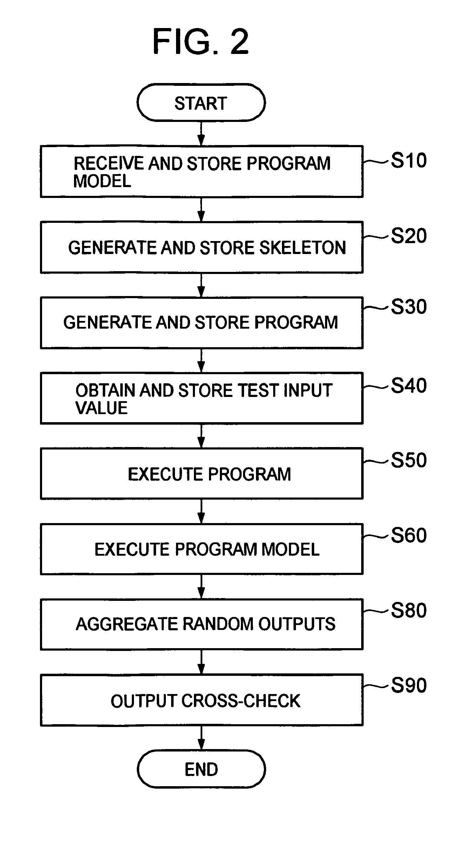

As shown in the flow chart of FIG. 2, the CPU 10 of the program creation support apparatus 100 first receives the program model 40 from the input device 81 and stores the program model 40 in the storage device 30 (S10). The programmodel 40, which, in this example, is received from the outside, may be created in the support apparatus 100 by storing, in advance, a program that creates the program model 40, based on design a specification of the program 60 in the support apparatus 100.

Next, the skeleton creation module 11 creates the skeleton 50 based on the program model 40 stored in the storage device 30, and stores the skeleton 50 in the storage device 30 (S20).

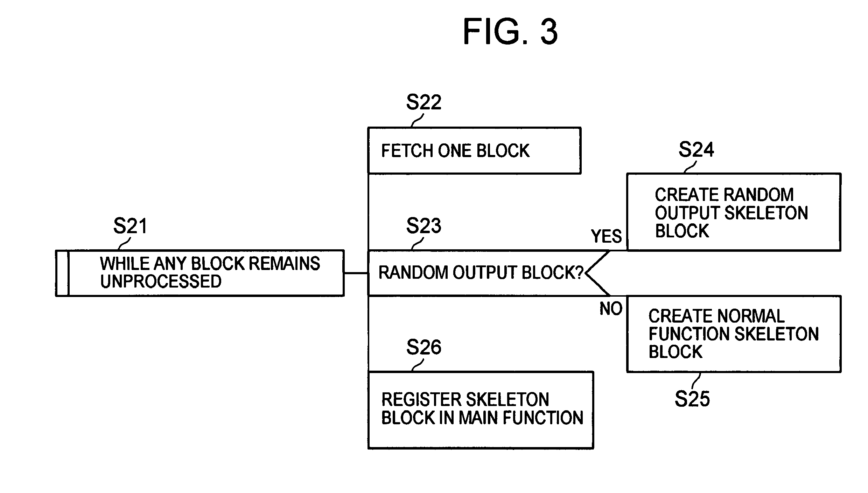

Details of the operation of the skeleton creation module 11 will be described with reference to a problem analysis diagram (PAD) shown in FIG. 3.

The skeleton creation module 11 repeatedly executes the following processing while one of a plurality of model blocks 41 to 44 constituting the program model 40 remains unprocessed (S21).

First, the skeleton creation module 11 fetches one of the plurality of model blocks 41 to 44, from the storage device 30 (S22) , and judges whether or not this block is the random output model block 44 (S23). When it is judged that the block fetched from the storage device 30 is the random output model block 44, the random output skeleton creation module 13 of the skeleton creation module 11 is activated and creates the random output skeleton block 54 based on the random output model block 44 (S24).

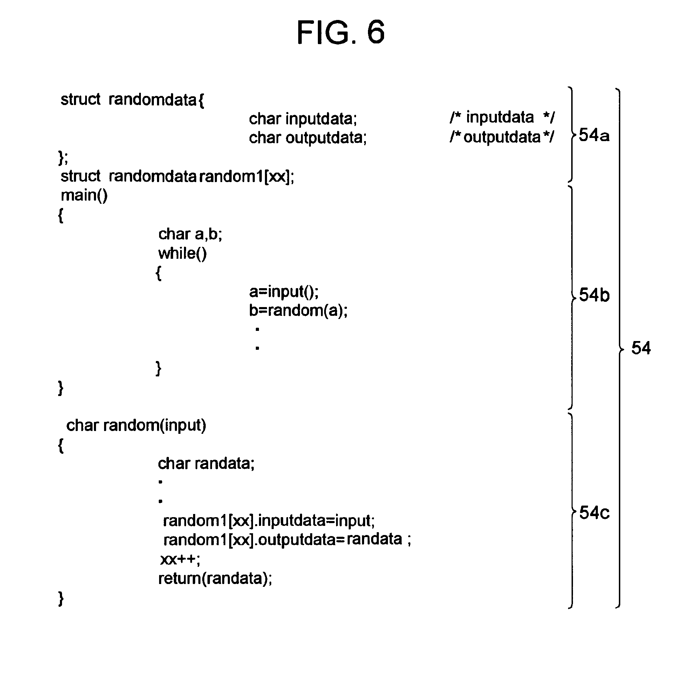

The random output skeleton block 54 has, as shown in FIG. 6, a first skeleton part 54a, which secures areas in the storage device 30 to store input data and output data, a second skeleton part 54b, which essentially forms the original random skeleton block created based on the random output model block 44, and a third skeleton part 54c, which copies the input data and the output data to the above secured storage device areas. In short, the random skeleton block 54 differs from the function skeleton blocks 51, 52, and 53, which will be described later, and has three parts including a part for storing input/output data in the storage device 30.

The random output skeleton creation module 13 registers the created random output skeleton block 54 in a main function, which is stored in the storage device 30 in advance (S26). The main function is a function that defines, for example, input-output timing of each of the respective blocks. The main function can be created and stored at any point as long as this is done before the skeleton creation module 11 creates the skeleton 50.

When it is judged in Step 23 that the block fetched from the storage device 30 is not the random output model block 54, the normal function skeleton creation module 12 of the skeleton creation module 11 is activated and creates the function skeleton blocks 51, 52, and 53 based on the normal function model blocks 41, 42, and 43, respectively, which do not output random values (S25). The normal function skeleton creation module 12 registers the created function skeleton blocks 51, 52, and 53 in the main function described above (S26).

Once the skeleton blocks 51 to 54 are created and registered in the main function by processing the plurality of model blocks 41 to 44 in the manner described above, the processing of creating the skeleton 50 (S20) is ended.

After the processing of creating the skeleton 50 (S20) is finished, the program generation module 15 reads the skeleton 50 from the storage device 30, receives program component data from the input device 81, generates the program 60 by incorporating the received data in the skeleton 50, and stores the program 60 in the storage device 30 as shown in the flow chart of FIG. 2 (S30) . The program component data received here is in a code format since the program 60 in this example is assumed to be in a code format.

Next, the test input value obtaining module 24 of the test execution module 21 obtains a plurality of test input values, which are denoted by 33, and stores the test input values 33 in the storage device 30 (S40) . The test input value obtaining module 24 obtains the test input values 33 by receiving a plurality of test input values from the input device 81.

The program execution module 25 of the test execution module 21 then reads the program 60 from the storage device 30 and executes the program 60 (S50).

Here, details of the operation of the program execution module 25 will be described with reference to a PAD shown in FIG. 3.

The program execution module 25 first reads the program 60 in the code format from the storage device 30, and converts the program model 60 into an execution format (S51). The program execution module 25 then repeatedly executes the following processing while any one of the plurality of test input values 33 stored in the storage device 30 remains to be set in the program model 60 (SS52).

The program execution module 25 fetches one of the test input values 33 from the storage device 30 and sets this test input value 33 as an input of the function 1 block 61 in the program 60 (S53) . The program execution module 25 then executes the function 1 block 61, sets the result of executing the function 1 block 61 as an input of the random output block 64, and sets the execution result as an input of the function 2 block 62 as well (S54).

The program execution module 25 next executes the random output block 64, sets the result of executing the random output block 64 as an input of the function 3 block 63, and stores the execution result in the storage device 30 as a random output value 35 (S55). An execution result of the random output block 64 (a random output value) is stored in the storage device 30 in association with an input value of the random output block 64, in other words, an execution result of the function 1 block 61.

Thereafter, the program execution module 25 executes the function 2 block 62 and the function 3 block 63 in succession, and stores their respective execution results in the storage device 30 as the block output values 36 (S56, S57).

The above Step 53 to Step 57 are executed until no test input value is left that has not been set in the program 50, and the program execution processing (S50) is then ended.

After the program execution processing (S50) is finished, the model execution module 22 executes the program model 40 as shown in the flow chart of FIG. 2 (S60).

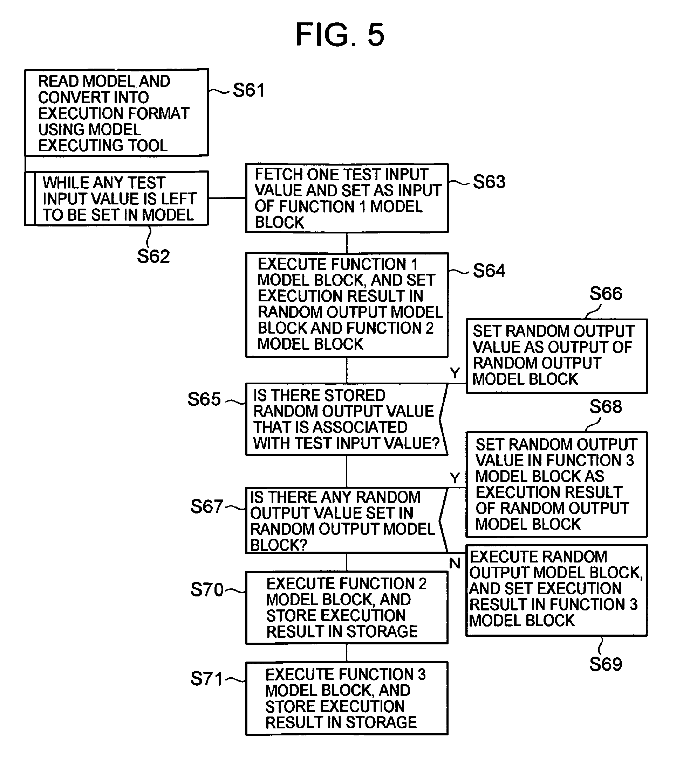

Here, details of the operation of the model execution module 22 will be described with reference to a PAD shown in FIG. 5.

The model execution module 22 first reads the program model 40 from the storage device 30, obtains from the storage device 30 the model execution tool 32, which is necessary to execute the program model 40, and converts the program model 40 into an execution format (S61). The model execution module 22 then repeatedly executes the following processing while any one of the plurality of test input values 33 stored in the storage device 30 remains to be set in the program model 40 (S62).

The model execution module 22 fetches one of the test input values 33 from the storage device 30 and sets this test input value 33 as an input of the function 1 model block 41 (S63). The model execution module 22 then executes the function 1 model block 41, sets the result of executing the function 1 model block 41 as an input of the random output model block 44, and an input of the function 2 model block 42 as well (S64).

The random output obtaining module 23 of the model execution module 22 judges whether or not the random output value 35 that is associated with the test input value 33 obtained in Step 63 is found in the storage device 30 (S65). When the associated random output value 35 is found in the storage device 30, the random output obtaining module 23 sets this random output value 35 as an output of the random output model block 44 (S66).

The model execution module 22 next judges whether or not a random output value is set as an output of the random output model block 44 (S67). When there is a random output value set, the model execution module 22 sets this random output value as an input of the function 3 model block 43 as the result of executing the random output model block 44 (S68). When there is no random output value set, the model execution module 22 executes the random output model block 44 and sets the result of executing the random output model block 44 as an input of the function 3 model block 43 (S69).

The model execution module 22 subsequently executes the function 2 model block 42 and stores the result of executing the function 2 model block 42 in the storage device 30 as a block output value 36 (S70). The model execution module 22 then executes the function 3 model block 43 and stores the result of executing the function 3 model block 43 as another block output value 36 (S71).

The model execution processing (S60) is thus finished.

After the model execution processing (S60) is finished, the random output aggregation module 26 reads the random output values 35 from the storage device 30 and executes processing of aggregating the read random output values 35 as shown in the flow chart of FIG. 2 (S80).

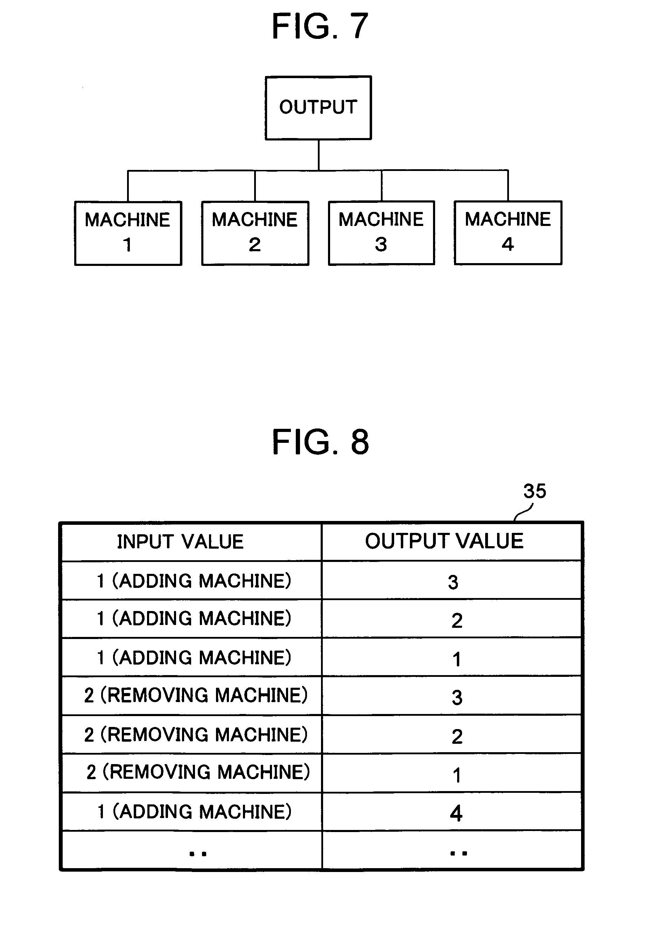

To give a specific example, as shown in FIG. 7, a system has four machines from which any one of the four machines is randomly selected to be booted up or to be shut down in order to obtain an objective output. Then, the random output block 64 in the program 60 in this example outputs a number that indicates which machine is to be booted up when an instruction is entered to add one machine to those already selected, and outputs a number that indicates which machine is to be shut down when an instruction is entered to lower the number of machines that are in operation by one.

As described above, each random output value 35 in the storage device 30 is associated with an input value that is inputted to the random output block 64.

Therefore, in the example of FIG. 7, a machine number is associated as the random output value 35 with each input value (adding a machine → 1, removing a machine → 2) of the random output block 64 in the storage device 30 as shown in FIG. 8.

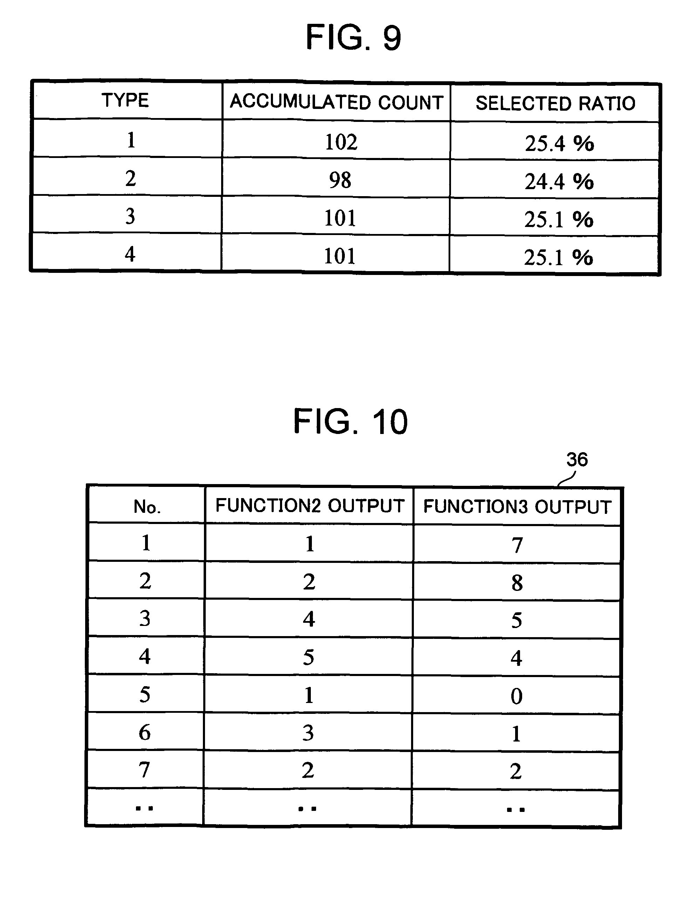

The random output aggregation module 26 reads these random output values 35 from the storage device 30, calculates for each machine number the cumulative number of times the machine number has been outputted as the random output value 35, and obtains the ratio (probability) of the cumulative number of times for each machine number with respect to the count of all output values, as shown in FIG. 9.

The random output aggregation module 26 supplies the above calculation results to the output control module 29, which causes the output device 82 to output the calculation results . A programmer takes a look at the output calculation results and, when the cumulative count of one machine number is substantially the same as that of another machine number, judges that the random output block 64 in the program 60 is an appropriate program.

After the random output aggregation processing (S80) is finished, the output cross-checking module 28 reads the block output values 36 and the model block output values 34 from the storage device 30, and executes output cross-checking processing as shown in the flow chart of FIG. 2 (S90).

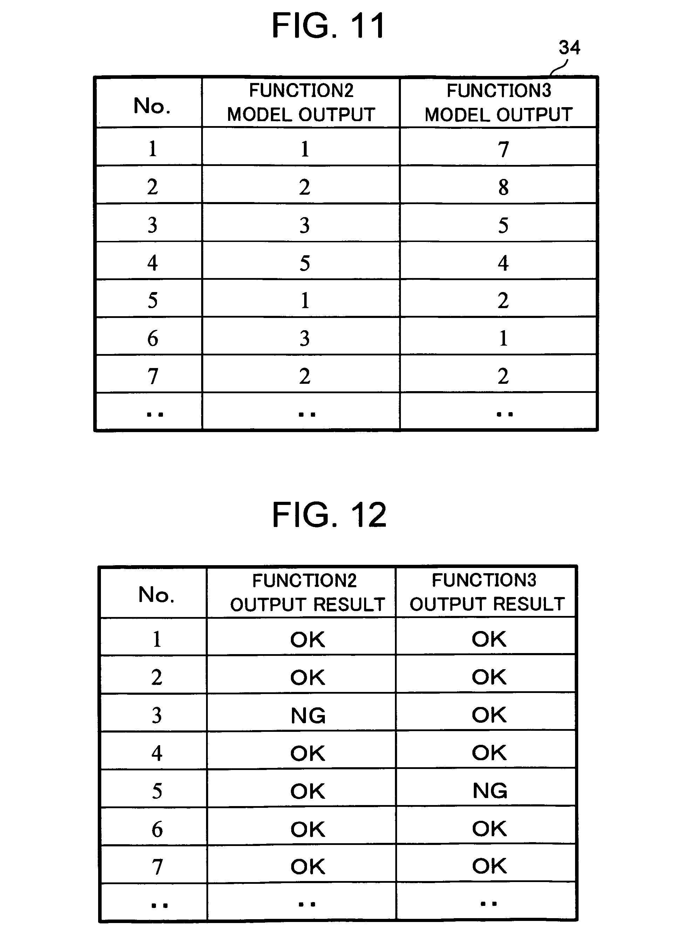

Specifically, the output cross-checking module 28 first reads the block output values 36 and the model block output values 34 from the storage device 30. In this example, the block output values 36 in the storage device 30 are stored in a manner that associates output values of the function 2 block 62 and output values of the function 3 block 63 with each other as shown in FIG. 10 each time the programs are executed. The model block output values 34 in the storage device 30 are stored in a manner that associates output values of the function 2 model block 42 and output values of the function 3 model block 43 with each other as shown in FIG. 11 each time the program models are executed. The output cross-checking module 28 in this case compares an output value of a program block and an output value of a model block for each execution unit, and outputs "OK" when the output value of the program block and the output value of the model block match, and "NG" when the output value of the program block and the output value of the model block do not match. The output cross-checking module 28 supplies the comparison results to the output control module 29, which causes the output device 82 to output the comparison results as shown in FIG. 12. The programmer takes a look at the output comparison results and, when even one "NG" is found, makes a correction by, for example, entering new program component data in Step 30 described above.

The output cross-checking processing (S90) is thus finished. The output cross-checking processing (S90) may be executed before the random output aggregation processing (S80) as long as it does not precede the program model execution processing (S60).

As described above, this embodiment makes it possible to test the program 60 even when the program 60 contains the random output block 64. Furthermore, the random output block 64 can be tested as well.

## Claims

1. An apparatus for supporting creation of a program containing a random output block which outputs a random value with respect to an input value, comprising:
a program storage area which stores the program;
a model storage area which stores a program model, the program model being based on a specification of the program and containing a random output model block, which corresponds to the random output block in the program;
an input value obtaining unit which obtains a test input value of the program;
a program execution unit which reads the program from the program storage area, executes the program, and obtains a result of executing the program on the test input value obtained by the input value obtaining unit;
a model execution unit which reads the program model from the model storage area, executes the programmodel using a model execution tool, and obtains a result of executing the program model on the test input value obtained by the input value obtaining unit; and
a cross-checking unit which performs one of outputting the execution result of the program execution unit and the execution result of the model execution unit, and comparing the execution result of the program execution unit and the execution result of the model execution unit to output a result of the comparison;
wherein the model execution unit obtains an output value of the random output block by executing the program by the program execution unit, and uses the output value of the random output block as an output value of the random output model block in the program model.

2. The apparatus for supporting creation of a program according to Claim 1, further comprising:
a skeleton generation unit which reads the program model from the model storage area and uses the program model to create a skeleton of the program; and
a program generation unit which receives program component data lacking in the skeleton, incorporates the program component data into the skeleton to generate the program, and stores the program in the program storage area;
wherein the skeleton generation unit includes a random output skeleton creation unit which creates a random output skeleton containing a step of storing an output value of the random output block in a specific storage area, in creating a skeleton of the random output block from the random output model block, and
wherein the model execution unit obtains the output value of the random output block which has been stored in the specific storage area by execution of the program by the program execution unit.

3. The apparatus for supporting creation of a program according to Claim 1,
wherein the input value obtaining unit obtains a plurality of test input values, and
the program execution unit executes the program for each of the plurality of test input values to obtain, for each of the plurality of test input values, an output value that the random output block outputs with respect to an input value of the random output block, and
wherein the apparatus further comprises a random output aggregation unit for creating data obtained by evaluating randomness of execution results of the random output block, using a plurality of input values of the random output block and output values that the random output block outputs with respect to the respective input values.

4. A program for supporting creation of a program containing a random output block which outputs a random value with respect to an input value, comprising:
an input value obtaining step of obtaining a test input value of the program;
a program execution step of reading the program, which is stored in a storage area of a computer, from the storage area, executing the program, and obtaining a result of executing the program on the test input value obtained in the input value obtaining step;
a model execution step of reading a program model from the storage area in the computer, executing the program model, using a model execution tool, and obtaining an execution result of the program model on the test input value obtained in the input value obtaining step, the program model being based on a specification of the program and containing a random output model block, which corresponds to the random output block in the program; and
a cross-checking step of outputting the execution result that is obtained through execution of the program execution step and the execution result that is obtained through execution of the model execution step;
wherein the model execution step includes obtaining an output value of the random output block which is outputted as a result of execution of the program in the program execution step, and using the output value of the random output block as an output value of the random output model block in the program model.

5. The program for supporting creation of a program according to Claim 4, further comprising:
a skeleton generation step of reading the program model stored in the storage area and using the program model to generate a skeleton of the program; and
a program generation step of receiving program component data lacking in the skeleton, incorporating the program component data into the skeleton, to generate the program, and storing the program in the storage area;
wherein the skeleton generation step includes a random output skeleton creation step of creating a random output skeleton containing a step of storing an output value of the random output block in a specific storage area of the computer, in creating a skeleton of the random output block from the random output model block, and
wherein the program execution step includes obtaining the output value of the random output block which has been stored in the specific storage area.

6. A method for supporting creation of a program containing a random output block which outputs a random value with respect to an input value, the method comprising:
a step of storing the program in a storage area;
a step of storing a program model in the storage area, the program model being based on a specification of the program and containing a random output model block, which corresponds to the random output block in the program;
a test value inputting step of inputting a test input value of the program;
a program execution step of reading the program from the storage area, executing the program, and obtaining a result of executing the program on the test input value inputted in the test value inputting step;
a model execution step of reading the program model from the storage area, executing the program model using a model execution tool, and obtaining an execution result of the program model on the test input value inputted in the test value inputting step ; and
a cross-checking step of performing one of outputting the execution result obtained in the program execution step and the execution result obtained in the model execution step, and comparing the execution result obtained in the program execution step and the execution result obtained in the model execution step, to output a result of the comparison;
wherein the model execution step includes obtaining an output value of the random output block by execution of the program in the program execution step, and using the output value of the random output block as an output value of the random output model block in the program model.

7. The method for supporting creation of a program according to Claim 6, further comprising:
a skeleton generation step of reading the program model from the storage area and using the program model to create a skeleton of the program; and
a program generation step of receiving program component data lacking in the skeleton, causing the computer to incorporate the program component data into the skeleton to generate the program, and storing the program in the storage area;
wherein the skeleton generation step includes a random output skeleton creation step, which creates a random output skeleton containing a step of storing an output value of the random output block in a specific storage area of the computer, in creating a skeleton of the random output block from the random output model block, and
wherein the model execution step includes obtaining the output value of the random output block which has been stored in the specific storage area, by execution of the program in the program execution step.
